# EUROPÄISCHE PATENTSCHRIFT

(11) **EP 2 790 867 B1**
(45) Veröffentlichungstag und Bekanntmachung des Hinweises auf die Patenterteilung: **14.11.2018**
(21) Anmeldenummer: 12809594.0
(22) Anmeldetag: 07.12.2012
(51) Int. Cl.: B23K 20/12

(54) **VERFAHREN ZUM REIBQUETSCHSCHWEISSEN FÜR ÜBERLAPPVERBINDUNGEN**
METHOD OF FRICTION SQUEEZE WELDING LAP JOINTS
PROCÉDÉ DE SOUDAGE PAR FRICTION-ÉCRASEMENT POUR ASSEMBLAGES À RECOUVREMENT

(30) Priorität: 16.12.2011 DE 102011121199; 31.01.2012 DE 102012001778
(43) Veröffentlichungstag der Anmeldung: 22.10.2014
(73) Patentinhaber: SCHINDELE, Paul, 87439 Kempten (DE)
(72) Erfinder: SCHINDELE, Paul, 87439 Kempten (DE)
(74) Vertreter: Hoefer & Partner Patentanwälte mbB
(86) Internationale Anmeldenummer: PCT/EP2012/005068
(87) Internationale Veröffentlichungsnummer: WO 2013/087176

(56) Entgegenhaltungen:
- JP-A- 3 032 478
- JP-A- 2004 174 575
- JP-A- 2004 351 441
- JP-A- 2004 358 536
- US-A- 3 831 262
- US-A1- 2002 158 109
- US-A1- 2004 134 971
- US-A1- 2006 138 197

## Beschreibung

Die Erfindung bezieht sich auf ein Verfahren zum Fügen von im Wesentlichen flachen oder blechartigen Werkstücken.

Zum stoffschlüssigen Fügen von Blechen, Drähten oder ähnlichen Werkstücken als auch zum Auftragsschweißen und Anschweißen können sowohl Schmelz- als auch Pressschweißverfahren verwendet werden.

Bei den Schmelzschweißverfahren entsteht ein gemeinsames Schmelzbad der beiden Verbindungspartner mit optionaler Zugabe eines Zusatzwerkstoffes, meist in Form eines Schweißdrahtes. Dabei entsteht anschließend ein Schmelz-Erstarrungsgefüge. Die Temperaturbelastung der Bauteile liegt im Fügebereich in Höhe der Schmelztemperaturen der zu fügenden Werkstoffe.

Bei Pressschweißverfahren wird neben der Erwärmung durch verschiedene Wärmequellen, wie elektrische Widerstanderwärmung, das Material auf Erweichungstemperatur gebracht und durch eine Anpresskraft zusammengepresst, wodurch eine Schweißverbindung entsteht.

Bei dem bekannten Reibrührschweißen werden die zu verbindenden Materialien durch einen Rührvorgang erwärmt und im Schweißbereich miteinander verrührt. Dieses Verfahren ist jedoch auf bestimmte gut verformbare Materialien und Mindestmaterialstärken begrenzt. Es arbeitet ohne Zusatzwerkstoff und ist bevorzugt auf das Nahtschweißen begrenzt.

Beim Kaltpressschweißen gibt es ebenfalls eine Begrenzung auf weichere Werkstoffe, bestimmte Materialstärken und Nahtformen.

Für das Plattieren von Blechen oder ähnlichem Flachmaterial ist das Walz- und das Sprengplattieren bekannt, bei dem unter großem örtlichen Druck das Auftragsmaterial mit dem Grundwerkstoff verbunden wird.

Aus der WO 2012/084140 A1 ist ein Verfahren zum Fügen von Werkstücken unter Verwendung eines Fügeelements vorbekannt, bei welchem die Werkstücke stumpf aneinandergrenzend angeordnet werden. Mittels eines rotierenden Fügeelements, welches auf eine Plastifizierungstemperatur erwärmt wurde, wird Zusatzwerkstoff in den Fügebereich eingebracht, um die beiden Werkstücke zu verschweißen.

Die DE 10 2005 037 134 B4 offenbart ein reibschweißbasiertes Verfahren zum Verbinden zweier flächiger Fügepartner. Dabei wird bei einem der Fügepartner eine Fügekante mit Hinterschneidungen hergestellt. Der zweite Fügepartner wird im Überlapp auf die Hinterschneidungen aufgebracht. Mittels eines rotierenden Schweißdorns wird der nicht mit Hinterschneidungen versehene Fügepartner auf Plastifizierungstemperatur erwärmt und in die Hinterschneidungen des ersten Fügepartners eingepresst. Es erfolgt somit zusätzlich eine Umformung von Bereichen eines Fügepartners, um dessen Material in formschlüssigen Eingriff mit den Hinterschneidungen zu bringen.

Die US 2006/138197 A1 (Basis für den Oberbegriff des Anspruchs 1) beschreibt ein Rührreibschweißverfahren, welches an unterschiedlich dicken Blechen einsetzbar ist. Dabei wird die Oberfläche mittels eines stiftförmigen Reibelements erwärmt, sodass eine Verbindung mit dem darunterliegenden Werkstück über Diffusionsvorgänge erfolgen kann. Als nachteilig erweist es sich, dass Oxidschichten zwischen den beiden zu verschweißenden Oberflächen der Werkstücke nicht entfernt werden können und dass sich bei dem verwendeten stiftartigen Reibelement unterschiedliche Bindefestigkeiten dadurch ergeben, dass der Kontaktbereich des Reibelements teils gleichlaufend, teils gegenläufig zu der Vorschubrichtung des Reibelements ist. Dies führt zu einer besseren Verbindung der beiden Werkstücke auf der Gegenlaufseite, als auf der Gleichlaufseite. Es liegen somit unterschiedliche Relativgeschwindigkeiten zwischen dem Reibelement und dem Werkstück über den Eingriffsquerschnitt vor.

Die US 2002/158109 A1 beschreibt ein Reibschweißverfahren, bei welchem beidseitig der zu verbindenden Fläche stabförmige Reibwerkzeuge in Kontakt mit den Oberflächen der Werkstücke gebracht werden, um Schweißpunkte oder Schweißnähte zu erzeugen. Das Verfahren ist durch die Verwendung zweier Reibelemente konstruktiv aufwändig. Zudem ist nicht sichergestellt, ob beide Reibelemente einen gleichen Wärmeeintrag und eine gleiche Plastifizierung der Werkstücke bewirken. Auch dies führt, abgesehen von der erwähnten Thematik mit stiftförmigen Reibelementen, zu unsicheren Arbeitsergebnissen.

Die US 3831262 A beschreibt ein Verfahren, bei welchem ein kurzzeitiges Aufschmelzen der Materialien der Werkstücke erfolgt. Nachfolgend tritt eine Rekristallisierung ein. Es handelt sich somit nicht um eine reine Plastifizierung zum Zwecke der Verbindung der Werkstücke.

Die JP 2004358536 A beschreibt ein Verfahren, bei welchem eine relativ große Zone des Werkstücks ausgeschmolzen wird. Eine reine Plastifizierung, wie bei der vorliegenden Erfindung, tritt nicht ein. Ähnliche Vorgehensweisen zeigen auch die JP 2004 351441 A und die JP 3032478 A.

Die JP 2004174575 A offenbart eine Variante eines Rührreibschweißverfahrens mit zusätzlicher Erwärmung mittels Laser.

Bei dem Verfahren gemäß US 2004 134971 A1 wird ein stabförmiges Reibelement zur Erwärmung vorgesehen, welches zu einem Aufschmelzen der Materialien der Werkstücke an dem Fügebereich führt.

Der Erfindung liegt die Aufgabe zugrunde, ein Verfahren zum Fügen von im Wesentlichen flachen oder blechartigen Werkstücken zu schaffen, welches bei einfachem Aufbau und einfacher, kostengünstiger Anwendbarkeit einen geringen maschinellen Aufwand erfordert und ein sicheres Fügen der Werkstücke ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die zu fügenden Bereiche der üblicherweise zwei Werkstücke aufeinander gelegt werden, wobei eines der Werkstücke an seiner Oberfläche mit einem rotierenden Reibelement in Kontakt gebracht wird, wobei das Reibelement mittels einer Anpresskraft gegen die Oberfläche gepresst wird.

In besonders günstiger Weiterbildung der Erfindung ist vorgesehen, dass das Reibelement rotierend längs der Oberfläche der Werkstücke bewegt wird. Alternativ hierzu ist es auch möglich, das Reibelement lediglich punktförmig auf die Oberfläche zu pressen. Auf diese Weise können erfindungsgemäß durchgehende Längsnähte oder kurze Schweißnähte oder Punktschweißungen realisiert werden.

Erfindungsgemäß wird ein in Form einer rotierenden Reibscheibe ausgebildetes Reibelement mit einer Anpresskraft auf das obere von zwei aufeinanderliegenden Blechen gepresst. Die Reibscheibe kann aus Stahl, Edelstahl, Hartmetall, Keramik oder anderen widerstandsfähigen Materialien hergestellt sein. Durch die Reibung zwischen Reibscheibe und oberem Blech erfolgt eine lokale schnelle Erwärmung und Plastifizierung des oberen Bleches im Bereich der Berührfläche zwischen Reibscheibe und oberem Blech. Der plastifizierte Teil des Bleches wird durch die Rotation der Reibscheibe etwas in Drehrichtung der Reibscheibe bewegt. Durch diese Bewegung sowie die Wärmeleitung in das darunterliegende Blech, kombiniert mit der Anpresskraft der Reibscheibe, entsteht eine Pressschweißverbindung zwischen den beiden Blechen. Wird die Reibscheibe mit einer bestimmten Vorschubgeschwindigkeit, Anpresskraft und Drehzahl über die beiden überlappenden Bleche bewegt, so entsteht eine Schweißnaht zwischen den Blechen. Soll eine Steppnaht oder sollen nur punktförmige Verbindungen hergestellt werden, so kann die rotierende Reibscheibe nur in bestimmten Abständen in die Bleche eingedrückt werden, wo dann eine rechteckige, dem Abdruck der Reibscheibe in das obere Blech entsprechende Verbindung entsteht. Das erfindungsgemäße Verfahren ist besonders bei vorhandenen Oxidschichten auf dem zu beschichtenden Material günstig, weil die Reibscheibe (das Reibelement) beim Reibvorgang leicht in die Oberfläche des unteren Bleches eindringt und es in diesem Bereich ebenfalls plastifiziert. Dadurch kommt es dann zu einem Verquetschen und Vermischen der beiden plastifizierten Bereiche von oberem und unterem Blech und einem gezielten Durchbrechen der Oxidschichten.

Auf diese Weise können Überlappverbindungen mit durchgehenden Schweißnähten, Steppnähten oder Punktverbindungen z.B. bei Stahl-, Aluminium-, Kupferblechen oder anderen metallischen Werkstoffen erzeugt werden. Auch Schweißverbindungen zwischen Metallen und keramischen Werkstoffen sind so herstellbar.

Bei Verwendung eines scheibenförmigen Reibelements ergibt sich der Vorteil, dass über die Kontaktfläche des Reibelements mit dem Werkstück an jedem Punkt dieselbe Relativgeschwindigkeit und dieselbe Reibung wirkt, wohingegen bei Verwendung eines rotierten stabförmigen Reibelements die Relativgeschwindigkeit zwischen Reibelement und Werkstück entlang des Reibelementquerschnitts variiert (die Relativgeschwindigkeit nimmt vom Mittelpunkt radial nach außen hin zu) und die Rotationsrichtung relativ zum Werkstück abhängig von der aktuell durchlaufenen Halbperiode einer Umdrehung wechselt (über eine halbe Umdrehung rotiert ein außerhalb des Mittelpunkts des stabförmigen Reibelements liegender Punkt der Kontaktfläche in Vorschubrichtung und über eine halbe Umdrehung rotiert dieser Punkt der Kontaktfläche entgegengesetzt zur Vorschubrichtung), was unterschiedliche Fügequalitäten zur Folge hat.

Von dem bekannten Walzplattieren unterscheidet sich das erfindungsgemäße Verfahren somit durch die Plastifizierung des oberen Bleches sowie durch die lokale Materialbewegung im Bereich der eintauchenden Reibscheibe.

Ein oder mehrere vorlaufende Vorelemente (Reibelemente) in Form von rotierenden Scheiben oder Rollen können sowohl für die Vorwärmung von Werkstück und Zusatzmaterial als auch für die Entfernung von Oxidschichten eingesetzt werden.

Bei dem erfindungsgemäßen Verfahren ist somit vorgesehen, zumindest zwei aufeinanderliegende Bleche oder blechartige Werkstücke über eine Pressschweißverbindung miteinander zu verbinden. Dabei wird das obere Blech mittels des Reibelements lokal auf Plastifizierungstemperatur gebracht. Aufgrund der Wärmeleitung in das darunterliegende Blech und aufgrund des ausgeübten Anpressdrucks erfolgt eine Verbindung der beiden Bleche. In einer Ausführungsform wird auch das unten liegende Blech zumindest teilweise plastifiziert. Das Reibelement selbst wird dabei nicht abgetragen, es liefert keinen Zusatzwerkstoff. Vielmehr erfolgt die Fügeverbindung der beiden Werkstücke ausschließlich durch die Materialien der beiden Werkstücke.

Das Reibelement rotiert bei dem erfindungsgemäßen Verfahren beispielsweise mit einer Drehzahl von 12.000 bis 18.000 U/min. Üblicherweise läuft das Reibelement trocken, das heißt, es erfolgt keine Zugabe weiterer Medien, um die Reiberwärmung optimal durchführen zu können.

Das erfindungsgemäße Verfahren eignet sich nicht nur zum Fügen zweier flacher, blechartiger, größerer Werkstücke. Es ist auch einsetzbar, um auf ein größeres Werkstück ein bandförmiges oder blechförmiges Werkstück aufzuschweißen. Hierdurch ist es beispielsweise möglich, durch das Aufschweißen eine Art von Beschichtung im Bereich der Schweißnaht zu erzeugen. Die Breite einer derartigen Auftragsschweißung wird dabei beispielsweise durch die Breite des Reibelements (Reibscheibe oder Reibwalze) bestimmt. Somit ist es möglich, auch breitere Streifen von Werkstücken auf ein anderes Werkstück aufzuschweißen und damit eine Form der Beschichtung vorzunehmen.

Beim Einsatz als Beschichtungsverfahren lassen sich auf diese Art zum Beispiel gut leitende Schichten aus Kupfer oder Aluminium auf schlecht leitenden Trägermaterialien herstellen. Auch Verschleißschutzschichten aus harten Materialien wie Wälzlagerstahl, Werkzeugstahl oder Korrosionsschutzschichten aus Edelstahl oder Zink können so aufgebracht werden. Es entsteht dabei eine fest verbundene geschlossene Schicht auf dem Grundmaterial.

Durch das Auftragen von mehreren Blechen oder Bändern in übereinanderliegenden Quetschverbindungen können mittels des erfindungsgemäßen Verfahrens auch Mehrlagenschweißungen und damit beliebig dicke Beschichtungen ausgeführt werden.

Es kann erfindungsgemäß vorteilhaft sein, wenn die Naht durch ein als Reibelement ausgebildetes Glättelement oder durch einen Walzvorgang bevorzugt im noch warmen Zustand anschließend geglättet wird.

Bei einem nachlaufenden scheibenförmigen Glättelement kann der Glättvorgang sowohl im Gleich- als auch im Gegenlauf relativ zur Vorschubrichtung erfolgen.

Beim stabförmigen nachlaufenden Glättelement erfolgt dies bevorzugt mit einer gegenläufigen Drehrichtung zum ersten Reibelement.

Das erfindungsgemäße Verfahren weist unter anderem folgende Vorteile auf:
- Geringere Wärmebeeinflussung als bei Schmelzschweißverfahren
- Geringer maschineller Aufwand
- Bei hoher Drehzahl oder Relativgeschwindigkeit zwischen Reibelement und Werkstück sowie optionaler zusätzlicher Wärmeeinbringung sind hohe Schweißgeschwindigkeiten erreichbar
- Für sehr viele, auch schwer schweißbare Werkstoffe wie Aluminium oder Kupfer einsetzbar
- Feinkörniges Nahtgefüge durch Umformvorgang
- Kein Schutzgas erforderlich, optional jedoch möglich
- Vorhandene Oxidschichten werden durch den Reibvorgang sicher entfernt
- Kein Schutz vor Lichtbogen- oder Laserstrahlung notwendig
- In Zwangslagen problemlos schweißbar oder beschichtbar, da kein flüssiges Schmelzbad
- Beschichtungen in fast beliebiger Breite herstellbar
- Beschichtungsdicke durch Mehrfachbeschichtung fast beliebig wählbar
- Glatte Oberflächen erzeugbar
- Hybridmaterialien durch Mehrfachschichten herstellbar
- Unempfindlich gegenüber Spaltbreiten und Lagetoleranzen

Nachfolgend wird die Erfindung anhand von Ausführungsbeispielen in Verbindung mit der Zeichnung beschrieben. Dabei zeigt:
Fig. 1 eine schematische perspektivische Darstellung eines ersten Ausführungsbeispiels der Erfindung,
Fig. 2 eine schematische perspektivische Darstellung eines Beispieles, das nicht Darstellung der Erfindung ist,
Fig. 3 eine vereinfachte Darstellung einer Ausführungsvariante ähnlich Fig.1,
Fig. 4 eine Seitenansicht der Anordnung gemäß Fig. 3,
Fig. 5 eine Seitenansicht eines Ausführungsbeispiels mit scheibenförmigem Reibelement und einem Vorelement und einem Glättelement,
Fig. 6 eine Draufsicht auf die Anordnung gemäß Fig. 5,
Fig. 7 eine stirnseitige Ansicht der Anordnung der Fig. 5,
Fig. 8 eine perspektivische Ansicht der Anordnung von Fig. 5,
Fig. 9 eine Ausgestaltungsvariante, analog Fig. 5, mit scheibenförmigem Reibelement sowie stiftförmigem Vorelement und stiftförmigem Glättelement,
Fig. 10 eine Draufsicht auf die Anordnung gemäß Fig. 9,
Fig. 11 eine Seitenansicht der Anordnung der Fig. 9,
Fig. 12 eine perspektivische Ansicht der Anordnung gemäß Fig. 9, und
Fig. 13 eine Ansicht eines weiteren Ausführungsbeispiels mit externer Wärmequelle.

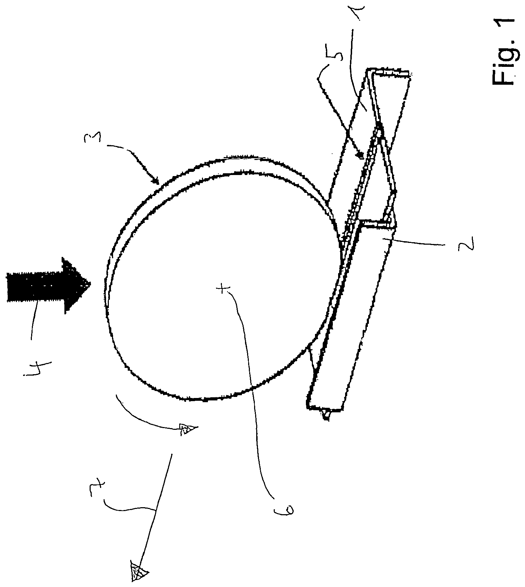

Die Fig. 1 zeigt eine vereinfachte perspektivische Darstellung eines ersten Ausführungsbeispiels der Erfindung. Ein oberes flaches, blechartiges Werkstück 1 liegt auf einem unteren blechartigen Werkstück 2. Die beiden Werkstücke 1, 2 werden durch geeignete Spannmittel oder auf ähnliche Weise in Position gehalten. Auf die Oberfläche des oberen Werkstücks 1 wird ein um eine Drehachse 6 rotierendes, scheibenförmiges Reibelement 3 aufgesetzt, welches mit einer Anpresskraft 4 gegen die Oberfläche des oberen Werkstücks 1 angepresst wird. Wie dargestellt, rotiert das Reibelement 3 um die Drehachse 6 und wird in Vorschubrichtung 7 bewegt. Durch die Reibung erfolgt eine Plastifizierung des Materials des oberen Werkstücks 1 im Kontaktbereich mit dem Reibelement 3. Zusätzlich kann es durch geeignete Zustellung in Richtung der Anpresskraft 4 möglich sein, auch Teile der Oberfläche des unteren Werkstücks 2, welche sich in Kontakt mit dem oberen Werkstück 1 befinden, zusätzlich zu plastifizieren.

Die Fig. 1 zeigt ein Reibelement 3, welches als Scheibe oder Zylinder ausgebildet ist. Es versteht sich, dass durch die Breite des Reibelements 3 die Breite der Fügenaht 5 definiert wird.

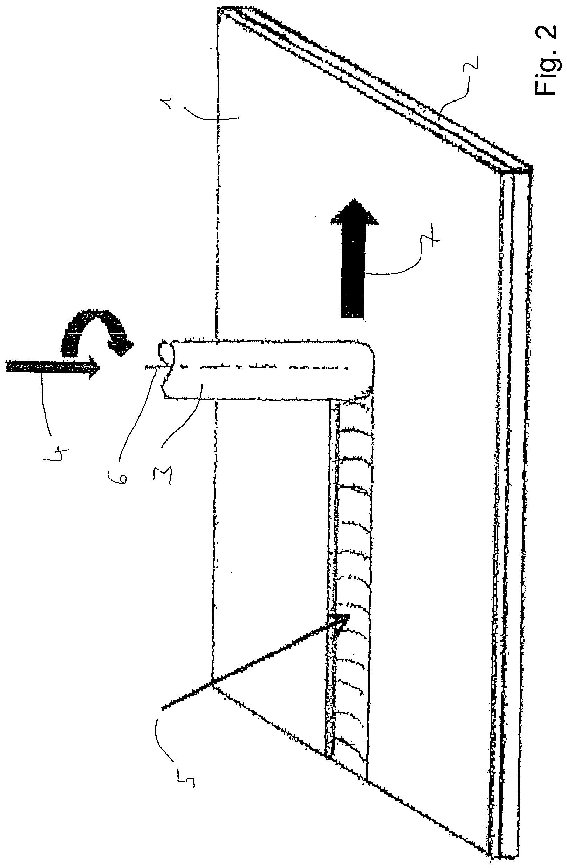

Die Fig. 2 zeigt ein Beispiel analog Fig. 1, das nicht Teil der Erfindung ist. Gleiche Teile sind mit gleichen Bezugsziffern versehen. Bei dem Ausführungsbeispiel der Fig. 2 ist das Reibelement 3 stabförmig ausgebildet und an seinem unteren Bereich an den Kanten gerundet.

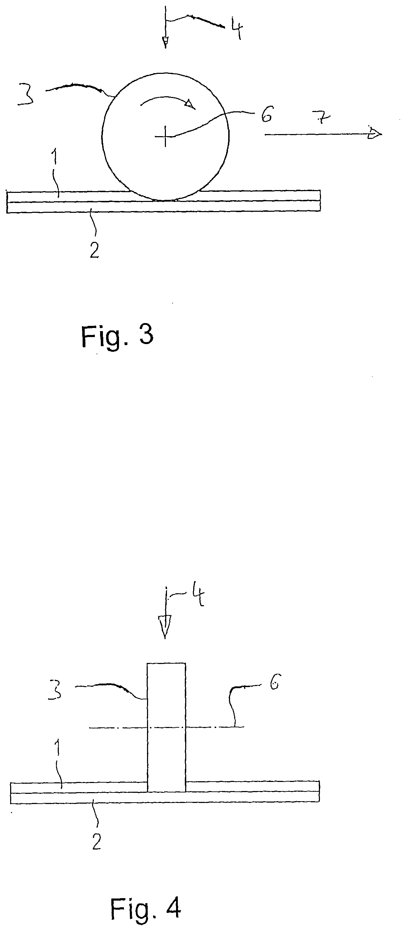

Die Fig. 3 und 4 zeigen eine weitere Ausgestaltungsvariante beziehungsweise eine weitere Darstellung des erfindungsgemäßen Verfahrens. Die Fig. 3 zeigt eine Seitenansicht, während die Fig. 4 eine stirnseitige Ansicht zeigt. Aus den Fig. 3 und 4 ergibt sich besonders deutlich, dass die aufeinanderliegenden Werkstücke 1 und 2 mittels des Reibelements 3 verschweißt werden. Das Reibelement 3 wird durch eine Zustellbewegung in das plastifizierte Material des oberen Werkstücks 1 eingedrückt, um das plastifizierte Material gegen das untere Werkstück 2 zu quetschen. Hierdurch entsteht eine Schweißnaht. In Abhängigkeit von der Aufbringung der Anpresskraft 4 und dem Vorschub des Reibelements 3 in Vorschubrichtung 7 ist es möglich, kontinuierliche Schweißnähte zu erzeugen oder Steppnähte oder Punktnähte zu realisieren.

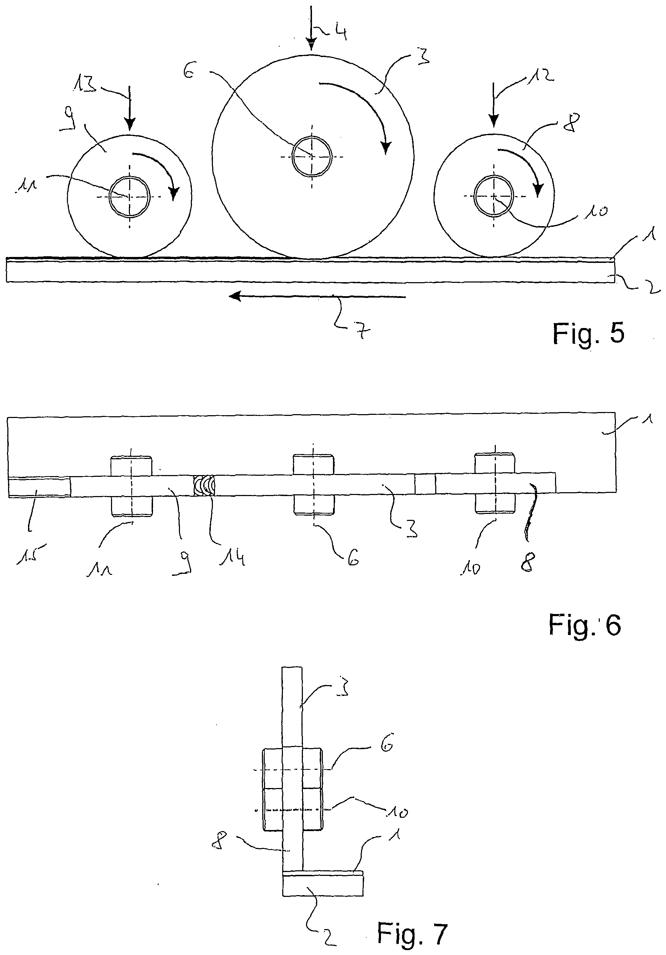

Die Fig. 5 bis 8 zeigen eine Ausgestaltungsvariante der Erfindung, bei welcher zusätzlich zu einem scheibenförmigen Reibelement 3 ein scheibenförmiges Vorelement 8 sowie ein nachlaufendes Glättelement 9 eingesetzt werden. Der Vorgang bei dem Reibelement 3 erfolgt, wie beispielsweise im Zusammenhang mit Fig. 1 beschrieben. Das vorlaufende Vorelement 8, welches sich um eine Drehachse 10 dreht, dient der Erwärmung insbesondere des oberen Werkstücks 1. Das Vorelement wird mittels einer Anpresskraft 12 gegen das obere Werkstück 1 angepresst.

Die Fig. 5 bis 8 zeigen weiterhin ein nachlaufendes Glättelement 9, welches um eine Drehachse 11 drehbar ist. Auch das Glättelement 9 wird mittels einer Anpresskraft 13 auf die miteinander gefügten Werkstücke 1 und 2 angepresst. Es kommt dabei in Kontakt mit der als Fügenaht ausgebildeten Schweißraupe 14 und glättet diese, so dass sich eine geglättete Schweißnaht 15 ergibt.

Wie aus den Fig. 5 bis 8 ersichtlich ist, dreht sich das Reibelement 3 sowie das Vorelement 8 und das Glättelement 9 jeweils in gleicher Richtung. Der Pfeil 7 zeigt die Vorschubrichtung der Werkstücke 1, 2.

Weiterhin zeigt insbesondere die Fig. 5 die Eindringtiefe des Reibelements 3, welches in den plastifizierten Bereich des oberen Werkstücks 1 eindringt, während das Vorelement 8 an der Oberfläche des oberen Werkstücks 1 entlang bewegt wird. Auch das Glättelement 9 dringt in die etwas tiefer liegende Schweißraupe 14 ein.

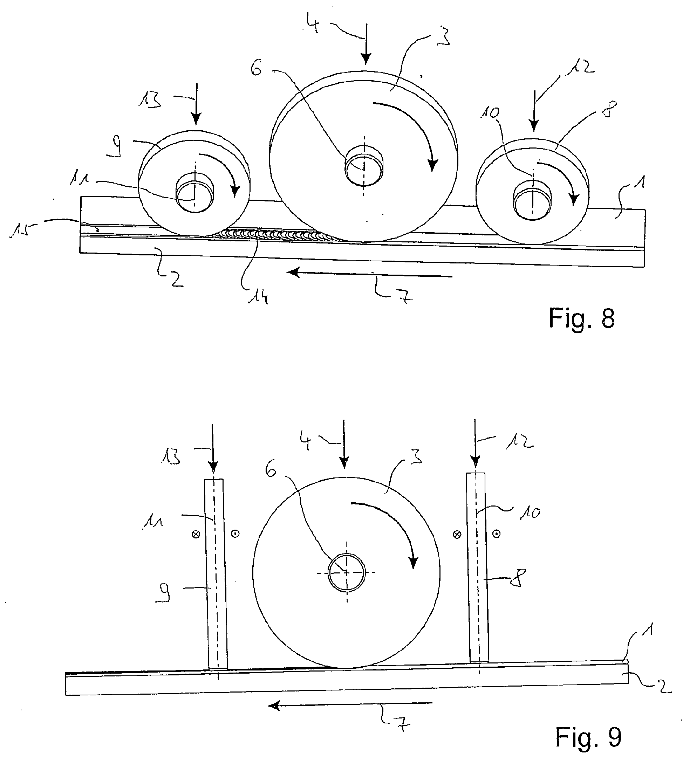

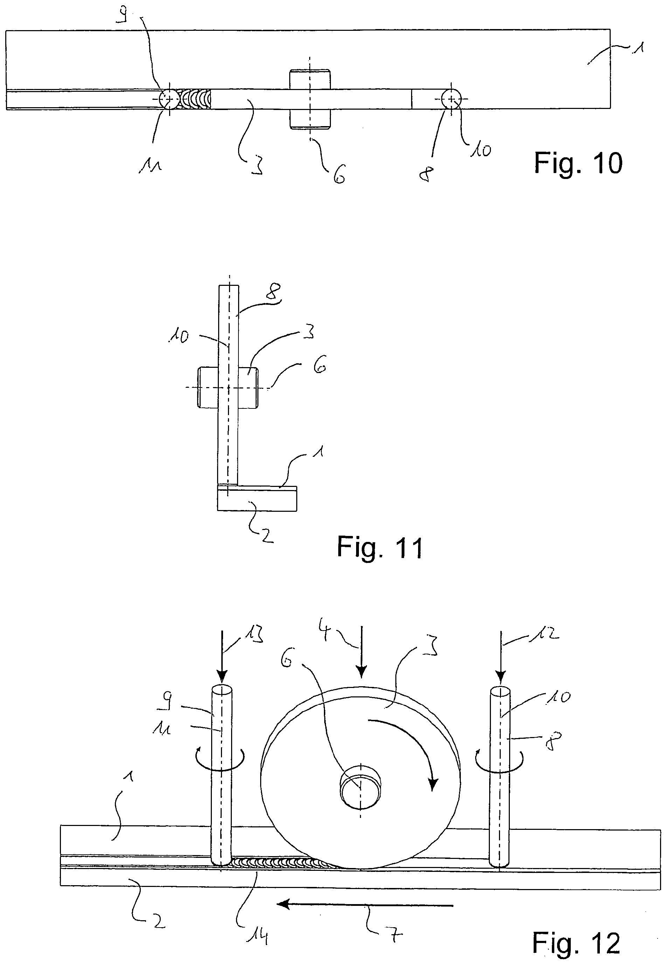

Die Fig. 9 bis 12 zeigen eine Ausgestaltungsvariante, bei welcher im Vergleich zu der Darstellung der Anordnung der Fig. 5 bis 8 sowohl das Vorelement 8 als auch das Glättelement 9 jeweils stabförmig ausgebildet sind. Gleiche Teile sind mit gleichen Bezugsziffern versehen. Es ergibt sich bei der Anordnung der Fig. 9 bis 12, dass durch das stabförmige Vorelement 8 sowie durch das stabförmige Glättelement 9 eine Vorerwärmung des oberen Werkstücks 1 beziehungsweise eine Glättung der Schweißraupe 14 erfolgt, so wie dies auch im Zusammenhang mit dem Ausführungsbeispiel der Fig. 5 bis 8 beschrieben wurde.

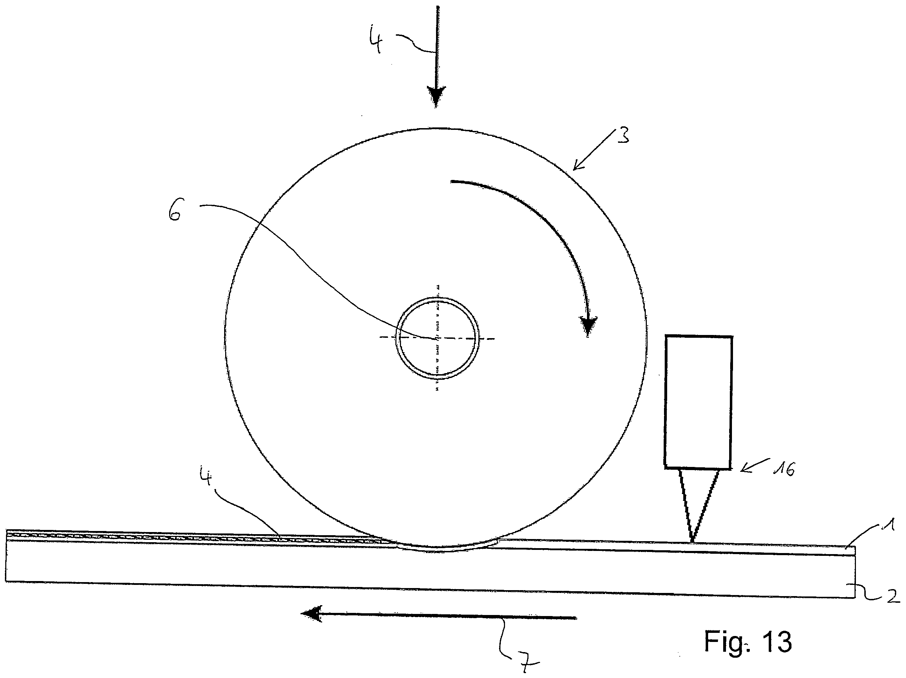

Die Fig. 13 zeigt eine weitere erfindungsgemäße Variante in einer Ansicht ähnlich Fig. 1, wobei vor dem Reibelement 3 eine externe Wärmequelle 16 angeordnet ist, welche das Werkstück 1 oder beide Werkstücke 1, 2 vorwärmt. Diese Wärmequelle 16 kann beispielsweise als Flamme oder Laserstrahl ausgebildet sein.

### Bezugszeichenliste:

- 1: oberes Werkstück
- 2: unteres Werkstück
- 3: Reibelement
- 4: Anpresskraft
- 5: Fügenaht
- 6: Drehachse
- 7: Vorschubrichtung
- 8: Vorelement
- 9: Glättelement
- 10: Drehachse
- 11: Drehachse
- 12: Anpresskraft
- 13: Anpresskraft
- 14: Schweißraupe
- 15: Schweißnaht
- 16: externe Wärmequelle

## Patentansprüche

1. Verfahren zum Fügen von zwei im Wesentlichen flachen oder blechartigen Werkstücken (1, 2), bei welchem die zu fügenden Bereiche der Werkstücke (1, 2) aufeinandergelegt werden, wobei eines (1) der Werkstücke an seiner Oberfläche mit einem rotierenden Reibelement (3) in Kontakt gebracht wird, wobei das Reibelement (3) mittels einer Anpresskraft (4) gegen die Oberfläche gepresst wird, so dass das Reibelement (3) durch eine Zustellbewegung in das plastifizierte Material des Werkstücks (1) eingedrückt wird, um das plastifizierte Material gegen das Werkstück (2) zu quetschen, **dadurch gekennzeichnet, dass** als Reibelement (3) ein scheibenförmiges Reibelement verwendet wird, welches beim Reibvorgang das Material des mit der Peripherie des scheibenförmigen Reibelementes (3) in Kontakt befindlichen Werkstücks (1) erwärmt und plastifiziert und welches leicht in die Oberfläche des dem Reibelement (3) abgewandten Werkstücks eindringt und beide Werkstücke (1, 2) auf Plastifizierungstemperatur erwärmt.

2. Verfahren nach Anspruch 1, **dadurch gekennzeichnet, dass** das Reibelement (3) rotierend längs der Oberfläche bewegt wird.

3. Verfahren nach Anspruch 1, **dadurch gekennzeichnet, dass** das Reibelement (3) rotierend punktförmig auf die Oberfläche gepresst wird.

4. Verfahren nach einem der Ansprüche 1 bis 3, **dadurch gekennzeichnet, dass** ein Werkstück (1) und/oder beide Werkstücke (1, 2) zusätzlich mittels einer externen Wärmequelle (16) erwärmt werden.

5. Verfahren nach einem der Ansprüche 1 bis 4, **dadurch gekennzeichnet, dass** vor dem Reibelement (3) ein rotierendes Vorelement mit einer Anpresskraft auf der Oberfläche des Werkstücks in Kontakt gebracht wird.

6. Verfahren nach einem der Ansprüche 1 bis 5, **dadurch gekennzeichnet, dass** die Fügenaht (5) durch ein nachlaufendes Glättelement geglättet wird.

7. Verfahren nach einem der Ansprüche 1 bis 6, **dadurch gekennzeichnet, dass** ein Reibelement (3) aus Metall oder Keramik verwendet wird.

## Claims

1. A method for joining two substantially flat or sheet-like workpieces (1, 2), in which the areas of the workpieces (1, 2) to be joined are placed on top of each other, wherein one (1) of the workpieces is contacted with a rotating friction element (3) at its surface, wherein the friction element (3) is pressed against the surface by means of a contact force (4), so that the friction element (3) is pressed into the plasticised material of the workpiece (1) by a feed motion, in order to squeeze the plasticised material against the workpiece (2),
**characterised in that**, as the friction element (3), a disk-shaped friction element is used, which, during the friction process, heats and plasticises the material of the workpiece (1) in contact with the periphery of the disk-shaped friction element (3), and which slightly penetrates into the surface of the workpiece facing away from the friction element (3) and heats both workpieces (1, 2) to the plasticising temperature.

2. The method according to claim 1, **characterised in that** the friction element (3) is moved along the surface in a rotating fashion.

3. The method according to claim 1, **characterised in that** the friction element (3) is pressed onto the surface in one spot in a rotating fashion.

4. The method according to any one of claims 1 to 3, **characterised in that** one workpiece (1) and/or both workpieces (1, 2) are additionally heated by means of an external heat source (16).

5. The method according to any one of claims 1 to 4, **characterised in that**, prior to the friction element (3), a rotating pre-element is contacted with the surface of the workpiece with a contact force.

6. The method according to any one of claims 1 to 5, **characterised in that** the joining seam (5) is smoothed by a subsequent smoothing element.

7. The method according to any one of claims 1 to 6, **characterised in that** a friction element (3) of metal or ceramics is used.

## Revendications

1. Procédé d'assemblage de deux pièces à usiner (1, 2) de type tôle ou sensiblement plates, pour lequel les zones à assembler des pièces à usiner (1, 2) sont placées l'une sur l'autre, dans lequel une (1) des pièces à usiner est amenée en contact sur sa surface avec un élément de friction (3) rotatif, dans lequel l'élément de friction (3) est pressé au moyen d'une force de pressage (4) contre la surface de sorte que l'élément de friction (3) soit enfoncé par un mouvement d'avance dans le matériau plastifié de la pièce à usiner (1) afin d'écraser le matériau plastifié contre la pièce à usiner (2),
**caractérisé en ce qu'**en tant qu'élément de friction (3), un élément de friction en forme de disque est utilisé, lequel réchauffe et plastifie lors du processus de friction le matériau de la pièce à usiner (1) se trouvant en contact avec la périphérie de l'élément de friction (3) en forme de disque et lequel pénètre légèrement dans la surface de la pièce à usiner éloignée de l'élément de friction (3) et réchauffe les deux pièces à usiner (1, 2) à la température de plastification.

2. Procédé selon la revendication 1, **caractérisé en ce que** l'élément de friction (3) est déplacé de manière à pouvoir tourner le long de la surface.

3. Procédé selon la revendication 1, **caractérisé en ce que** l'élément de friction (3) est pressé de manière à pouvoir tourner ponctuellement sur la surface.

4. Procédé selon l'une quelconque des revendications 1 à 3, **caractérisé en ce qu'**une pièce à usiner (1) et/ou les deux pièces à usiner (1, 2) sont en outre réchauffées au moyen d'une source de chaleur externe (16).

5. Procédé selon l'une quelconque des revendications 1 à 4, **caractérisé en ce qu'**avant l'élément de friction (3) un pré-élément rotatif est amené en contact avec une force de pressage sur la surface de la pièce à usiner.

6. Procédé selon l'une quelconque des revendications 1 à 5, **caractérisé en ce que** le joint (5) est lissé par un élément de lissage en aval.

7. Procédé selon l'une quelconque des revendications 1 à 6, **caractérisé en ce qu'**un élément de friction (3) en métal ou céramique est utilisé.
